# EUROPEAN PATENT SPECIFICATION

(11) **EP 4 258 854 B1**
(45) Date of publication and mention of the grant of the patent: **08.04.2026**
(21) Application number: 21763398.1
(22) Date of filing: 20.08.2021
(51) Int. Cl.: A01D 34/43

(54) **APPARATUS FOR TOWING BEHIND A VEHICLE**
VORRICHTUNG ZUM SCHLEPPEN HINTER EINEM FAHRZEUG
APPAREIL POUVANT ÊTRE REMORQUÉ À L'ARRIÈRE D'UN VÉHICULE

(30) Priority: 14.12.2020 GB 202019677
(43) Date of publication of application: 18.10.2023
(73) Proprietor: Wessex International Machinery, East Portway Industrial Estate Andover Hampshire SP10 3QN (GB)
(72) Inventor: BROWNING, Charles, Andover Hampshire SP10 3QN (GB); WILLS, Paul, Andover Hampshire SP10 3QN (GB); WOLFENDEN, Roy, Andover Hampshire SP10 3QN (GB); HORSFIELD, Jack, Andover Hampshire SP10 3QN (GB)
(74) Representative: Murgitroyd & Company
(86) International application number: PCT/GB2021/052170
(87) International publication number: WO 2022/129825

(56) References cited:
- EP-B1- 1 095 551
- CN-A- 102 577 681
- RU-C2- 2 613 140
- US-A1- 2016 095 273
- US-A1- 2020 137 954
- US-B2- 9 185 839

## Description

### Field of the Invention

The present disclosure relates to an apparatus for towing behind a vehicle, and more specifically to an apparatus comprising a wheel moveable from a first position to a second position. The use of the apparatus is also described.

### Background to the Invention

In agriculture and other industries, pieces of apparatus are commonly towed behind vehicles such as tractors. Whilst the towed apparatus can have a variety of functions depending on the needs of the user, in many cases the towed apparatus is a mower. Mowers are commonly used for cutting grass, plant matter and other vegetation both commercially and domestically. For ease of towing, such pieces of apparatus typically comprise wheels to allow the vehicle to move the apparatus across the ground without undue resistance.

Where a piece of apparatus is towed behind a vehicle, it is known to mount the wheels to the sides of the apparatus. Positioning the wheels in this manner can be advantageous, as it ensures the apparatus tracks any undulations in the surface below the apparatus with great accuracy. Where the apparatus is a mower, positioning the wheels in this way ensures the grass is cut to a consistent length across the mowed area.

However, positioning the wheels at the sides of the apparatus is not without its disadvantages. Where the wheels are located at the sides of the apparatus, this creates difficulties in operating the apparatus close to solid barriers such as curbs, trees, or fences. Where the apparatus is a mower, this can result in large areas of uncut grass at the perimeter of the mowed area.

To overcome the above-mentioned issues, it is also known to provide pieces of apparatus for towing behind a vehicle where the wheels are located behind the body of the apparatus. Where the wheels are located behind the body of the apparatus, this allows a user to operate the apparatus adjacent to any solid barriers. However, positioning the wheels of the apparatus in this manner is problematic, as the apparatus no longer tracks any undulations in the surface below the apparatus with the desired accuracy. Additionally, positioning the wheels in this manner can lead to large forces on the towing connection between the apparatus and the towing vehicle.

Objects and aspects of the present invention seek to address at least the above problems of the prior art.

EP 1,095,551 relates to an agricultural machine.

### Summary of the Invention

According to the present invention there is provided an apparatus for towing behind a vehicle comprising: a body portion; a wheel; and a mounting member connecting the wheel to the body portion; wherein the mounting member comprises a hinge portion, and wherein the wheel is movable from a first position substantially behind the body portion to a second position substantially adjacent to the body portion via actuation of the hinge portion; characterised in that the mounting member further comprises a securing structure for securing the wheel in the first position and/or the second position, and wherein the securing structure comprises a first securing portion and a second securing portion, wherein the hinge portion is intermediate the first securing portion and the second securing portion.

In this way, there is a provided an apparatus for towing behind a vehicle where the wheels can be moved from a first position where the wheels are at the side of the apparatus to a second position where the wheels are positioned behind the apparatus. In the first position, the apparatus effectively tracks any undulations in the ground below the apparatus, and in the second position the apparatus can be used directly adjacent to a solid border. The hinged connection allows the rapid transition of the wheels between these two positions, allowing the user to quickly transition the apparatus between the two configurations during use.

Advantageously, moving the wheels between the first and second positions can be completed very rapidly by the user. This facile change of configuration is attributed to the mounting member, and more specifically the hinge portion that allows a user to rotatably re-position the wheel without requiring additional tooling, thus saving a considerable amount of time.

The mounting member comprises a securing structure for securing the wheel in a first position and/or in a second position. The use of a securing structure is advantageous as it allows the wheel to be firmly and securely fixed in the first and or second position.

The securing structure of the apparatus comprises a first securing portion and a second securing portion, wherein the said hinge portion is intermediate said first securing portion and said second securing portion. Such a feature may be advantageous in allowing the wheel to be more easily secured in the first and/or second position.

Preferably, one of the first securing portion and the second securing portion comprises an aperture, and the other of the first securing portion and the second securing portion comprises a projection dimensioned to engage with or pass through the aperture when the wheel is in the second position. Preferably, the projection comprises a releasable pin. Preferably, the projection comprises a bolt. More preferably the projection comprises a nut and bolt in combination. Preferably, the projection comprises a threaded portion. In this way, an engagement formation that advantageously allows the wheel to be secured in the first or second position may be provided.

Preferably, the first securing portion comprises a first securing portion aperture and the second securing portion comprises a second securing portion aperture. More preferably, the cross section of the first securing portion aperture and the second securing portion aperture are substantially identical.

Preferably, the first securing portion aperture and the second securing portion aperture are positioned such that they define a second position common aperture when the wheel is in the second position. More preferably, the second position common aperture has a cross section identical to the first securing portion aperture and/or the second securing portion aperture.

Preferably, the securing structure comprises a fixing member sized to extend at least partially through the second position common aperture. More preferably, the fixing member is sized to extend completely though the second position common aperture.

Preferably, at least one of the first securing portion aperture and the second securing portion aperture comprises an aperture thread, and the fixing member comprises a fixing thread complementary to the aperture thread. More preferably, both the first securing portion aperture and the second securing portion aperture comprise an aperture thread, and the fixing member comprises a fixing thread complementary to the aperture thread. Preferably, the fixing member comprises a releasable pin. Preferably, the fixing member comprises a bolt. More preferably the fixing member comprises a nut and bolt in combination. Preferably the fixing member comprises a threaded pin.

Preferably, the fixing member is held in place via a friction fit.

Preferably, the securing structure comprises a third securing portion. Preferably, the hinge portion is intermediate the first securing portion and the third securing portion. Preferably, the hinge portion is intermediate the second securing portion and the third securing portion. Preferably, the third securing portion is positioned behind the centre line of the body portion. More preferably, the third securing portion extends behind or projects from the body portion.

Preferably, one of the second securing portion and the third securing portion comprises an aperture, and the other of the second securing portion and the third securing portion comprises a projection dimensioned to engage with or pass through the aperture when the wheel is in the first position.

Preferably, the second securing portion comprises a second securing portion aperture and said third securing portion comprises a third securing portion aperture. More preferably, the cross section of the second securing portion aperture is substantially identical to the cross section of the third securing portion aperture.

Preferably, the second securing portion aperture and the third securing portion aperture are positioned such that they define a first position common aperture when the wheel is in the first position. Preferably, the cross section of the first position common aperture is substantially identical to the cross section of the third securing portion aperture and or the second securing portion aperture.

Preferably, the securing structure comprises a fixing member sized to extend at least partially through the first position common aperture. More preferably, the securing structure comprises a fixing member sized to extend completely through the first position common aperture.

Preferably, at least one of the second securing portion aperture and the third securing portion aperture comprises an aperture thread, and the fixing member comprises a fixing thread complementary to the aperture thread. More preferably, both the second securing portion aperture and the third securing portion aperture comprise an aperture thread, and the fixing member comprises a fixing thread complementary to the aperture thread. Preferably, the fixing member comprises a releasable pin. Preferably, the fixing member comprises a bolt. More preferably, the fixing member comprises a nut and bolt in combination. Preferably, the fixing member comprises a threaded pin. Preferably, the fixing member is held in place via a friction fit.

Preferably, the securing structure comprises a clamp and/or clip. More preferably, the securing structure comprises a plurality of clamps or clips. The use of one or more clamps or clips may further increase the solidity with which the wheel is held in the first or second position.

Preferably, the hinge portion allows the wheel to move approximately 180° around the hinge axis. More preferably, the hinge portion prevents the wheel from moving more than 180°around the hinge axis. Limiting the movement of the wheel around the hinge axis in this manner may increase the ease with which the wheel can be positioned by a user.

Preferably, the apparatus comprises an adjustment mechanism for adjusting the height of the body relative to said wheel. Preferably, the adjustment mechanism is configured to allow the height of the body to be adjusted relative to the wheel when the wheel is in the first position. Preferably, the adjustment mechanism is configured to allow the height of the body to be adjusted relative to the wheel when the wheel is in the second position. More preferably, the adjustment mechanism is configured to allow the height of the body to be adjusted relative to the wheel when the wheel is in both the second and first position.

Preferably, the apparatus is a mower. More preferably, the apparatus is a flail mower. Still more preferably, the axis of rotation of the wheel and the axis of rotation of a flail within the flail mower are coaxial when the wheel is in the second position. In this way, the flail mower will track undulations in the surface below the flail mower with the greatest accuracy during the mowing process.

Preferably, the apparatus further comprises a second wheel and a second mounting member connecting the second wheel to said body portion, wherein the second mounting member comprises a hinge portion, wherein the second wheel is movable from a first position substantially behind the body portion to a second position substantially adjacent to the body portion via actuation of the hinge portion.

Preferably, the wheel and the second wheel are connected to the body portion such that the movement of the wheel between its first and second positions is independent of the movement of the second wheel between its first and second positions.

Preferably, the apparatus is substantially symmetrical about at least one line of symmetry. Preferably, the wheel and the second wheel are positioned symmetrically about the body portion. A symmetrical apparatus may, advantageously, be more stable during use.

Preferably, the hinge portion comprises a first plate and a second plate, the first plate and the second plate connected by a hinge pin. Preferably, the first plate is permanently affixed to the body portion.

Preferably, the apparatus further comprises a tow bar.

According to a second aspect of the present invention there is provided the use of the apparatus as hereinbefore described behind a vehicle.

### Detailed Description of the Invention

An embodiment of the present invention will now be described by way of example only and with reference to the accompanying drawings, in which:
Figure 1 is a schematic front view of a flail mower according to the first aspect of the present invention;
Figure 2 is a further schematic view of the flail mower of Figure 1; and
Figure 3 is another schematic view of the flail mower depicted in Figures 1 and 2.

As used herein, a "vehicle" refers to a tractor, a quad bike, or any type of vehicle having means for towing an apparatus, such as a mower, behind the vehicle during operation. Typically, these vehicles are suitable for use in woodland areas or on grassy terrains.

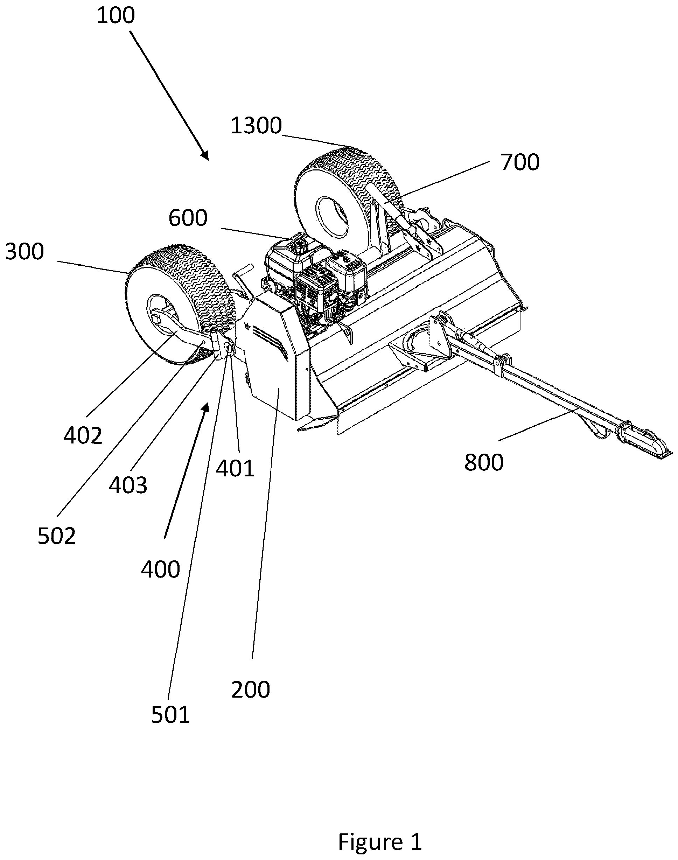

Turning first to Figure 1, there is depicted a flail mower 100 according to the present invention. The flail mower 100 comprises a body portion 200, and a wheel 300, the wheel 300 attached to the body portion 200 via a mounting member 400. The mounting member 400 comprises a first mounting portion 401 and a second mounting portion 402 located either side of a hinge portion 403. The hinge portion 403 is positioned such that the first mounting portion 401 is smaller than the second mounting portion 402. The hinge portion 403 extends across the full height of the mounting member 400. Both the first mounting portion 401 and the second mounting portion 402 are substantially flat plates. Additionally, the first mounting portion is fixed to the side of the body portion 200.

As can also be seen in Figure 1, the mounting portion comprises a securing structure. More specifically, the first mounting portion 401 comprises a first securing portion 501. The first securing portion 501 is an aperture or recess in in the first mounting portion 401 that extends into the body portion 200. The first securing portion 501 comprises a screw thread for receiving a threaded object such as a bolt.

The second mounting portion 402 also comprises a securing structure in the form of a second securing portion 502. The second securing portion 502 comprises an aperture that extends through the complete thickness of the second mounting member 402. Again, the second securing portion 502 comprises a thread within the aperture for receiving a threaded object such as a bolt.

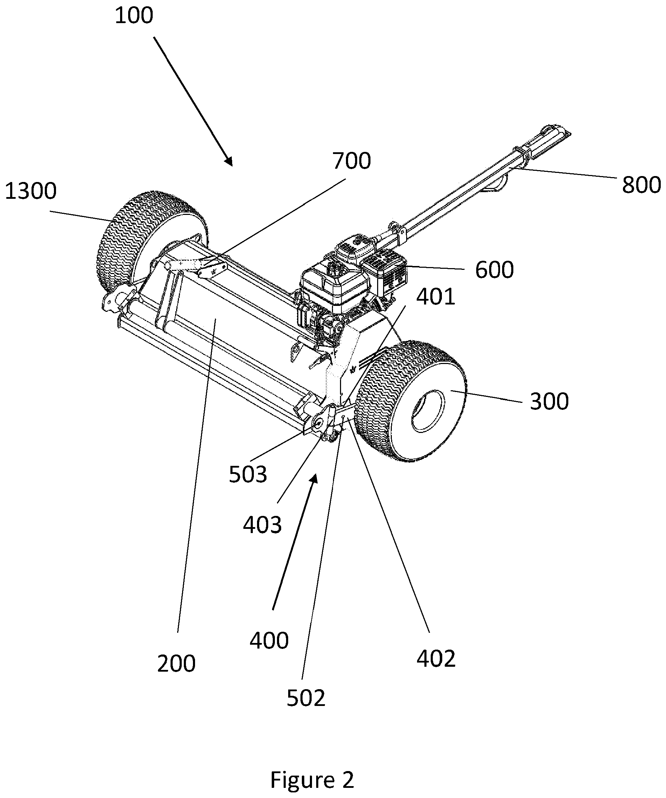

The mounting member 400 also include a third securing portion 503 (see Figure 2). In this embodiment of the invention, the third securing portion 503 projects outwardly form a back face of the body portion 200. The third securing portion 503 comprises an aperture that extends through its complete thickness. Again, the third securing portion 503 comprises a thread within the aperture for receiving a threaded object such as a bolt.

In the configuration depicted in Figure 1, the wheel 300 is located in a first position behind the body portion 200. Here, the first mounting portion 401 and the second mounting portion 402 are positioned such that they form a substantially continuous line extending backwardly from the body portion 200. As such, the wheel 300 lies behind the body portion 200, with its axis of rotation also lying behind the body portion 200 and parallel to a rear edge of the body portion 200.

Additionally, the second securing portion 502 and the third securing portion 503 are positioned such that their respective apertures align to form a first position common aperture. A threaded bolt can engage with threads within the apertures to hold the wheel 300 in the first position behind the body portion 200.

The flail mower 100 comprises a second wheel 1300, connected to the body portion 200 in the same manner as the wheel 300. The structure connecting the second wheel 1300 to the body portion 200 is substantially a mirror image of the structure connecting the wheel 300 to the body portion 200. As such, the second wheel 1300 is again located in a first position substantially behind the body portion 200. Again, the axis of rotation of the second wheel 1300 lies behind the body portion 200 and further lies parallel to a rear edge of the body portion 200. Additionally, the axis of rotation of the wheel 300 and the second wheel 1300 are coaxial when the wheels are in the first position.

The flail mower 100 of Figure 1 further comprises a motor 600 configured to drive a mower blade or blades located within the body portion 200. Additionally, the flail mower comprises an adjustment mechanism 700 for adjusting the height of the wheel 300 relative to the body. The flail mower 100 further comprises a tow bar 800 for attaching the flail mower 100 to a vehicle, in use.

Turning now to Figure 2, there is depicted the flail mover 100 of Figure 1 where the wheel 300 and the second wheel 1300 are located in second positions adjacent to sides of the body portion 200. In each case, the axis of rotation of the wheel 300 and the second wheel 1300 extends though the body portion 200. Additionally, the axis of rotation of the wheel 300 and the second wheel 1300 are coaxial when the wheels are in the second position.

When the wheel is in the second position, the first mounting member 401 and the second mounting member 402 are positioned such that a face of each member substantially abut. Additionally, the aperture of the first securing portion 501 and the aperture of the second securing portion 502 align to form a second position common aperture. A fixing member is inserted though the second position common aperture to fix the wheel 300 in the second position. The fixing member comprises a thread that engages with a thread inside the second position common aperture.

Figure 2 further depicts the second wheel 1300 in the second position. Both the wheel 300 and the second wheel 1300 can be moved between the first and second positions independently of one another. When the wheel 300 and the second wheel 1300 are in the first position, the flail mower can be used easily against the perimeter of the area to be mowed. When the wheel 300 and the second wheel 1300 are in the second position, the flail mower 100 will accurately track undulations in the ground below the body portion 200. In this way, the flail mower 100 provides the advantages of wheels in both positions, allowing the user to trivially move the wheels 300, 1300 between positions as required using the respective hinge portions 403 within the mounting members 400. Additionally, the wheels 300, 1300 can be secured in position using the respective securing structures.

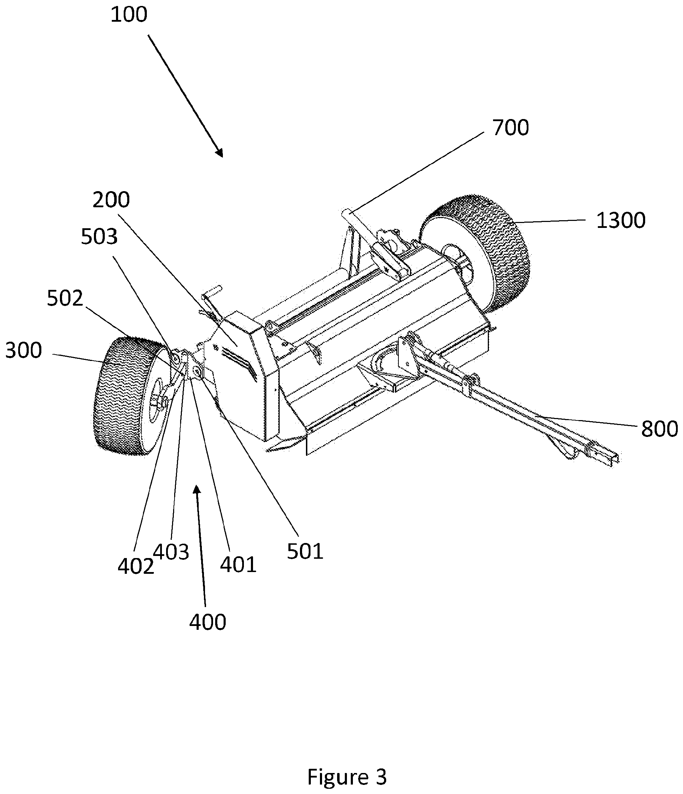

To further assist the reader, Figure 3 illustrates the wheel 300 and the second wheel 1300 in an intermediate position between the first position and the second position.

Here, the mounting member 400, first mounting portion 401, second mounting portion 402, hinge portion 403 and first 501, second 502 and third 503 securing portions can be seen in greater clarity.

## Claims

1. Apparatus (100) for towing behind a vehicle, said apparatus (100) comprising:
a body portion (200);
a wheel (300); and
a mounting member (400) connecting said wheel (300) to said body portion (200);
wherein said mounting member (400) comprises a hinge portion (403), and
wherein said wheel (300) is movable from a first position substantially behind said body portion (200) to a second position substantially adjacent to said body portion (200) via actuation of said hinge portion (403);
**characterised in that** said mounting member (400) further comprises a securing structure for securing said wheel (300) in said first position and/or said second position, and
wherein said securing structure comprises a first securing portion (501) and a second securing portion (501), wherein said hinge portion (403) is intermediate said first securing portion (501) and said second securing portion (502).

2. The apparatus (100) of claim 1, wherein one of said first securing portion (501) and said second securing portion (502) comprises an aperture, and the other of said first securing portion (501) and said second securing portion (502) comprises a projection dimensioned to engage with or pass through said aperture when said wheel (300) is in said second position.

3. The apparatus (100) of claim 1, wherein said first securing portion (501) comprises a first securing portion aperture and said second securing portion (502) comprises a second securing portion aperture; wherein the cross section of said first securing portion aperture and said second securing portion aperture are substantially identical.

4. The apparatus (100) of claim 3, wherein said first securing portion aperture and said second securing portion aperture are positioned such that they define a second position common aperture when said wheel (300) is in said second position; wherein said second position common aperture has a cross section identical to said first securing portion aperture and/or said second securing portion aperture.

5. The apparatus (100) of claim 4, wherein said securing structure comprises a fixing member sized extend at least partially through said second position common aperture; wherein at least one of said first securing portion aperture and said second securing portion aperture comprises an aperture thread, and said fixing member comprises a fixing thread complementary to said aperture thread.

6. The apparatus (100) of any one preceding claim, wherein said securing structure comprises a third securing portion (503); wherein said hinge portion (403) is intermediate said first securing portion (501) and said third securing portion (503); wherein said hinge portion (403) is intermediate said second securing portion (502) and said third securing portion (503).

7. The apparatus (100) of claim 6, wherein one of said second securing portion (502) and said third securing portion (503) comprises an aperture, and the other of said second securing portion (502) and said third securing portion (503) comprises a projection dimensioned to engage with or pass through said aperture when said wheel (300) is in said first position; wherein said second securing portion (502) comprises a second securing portion aperture and said third securing portion (503) comprises a third securing portion aperture.

8. The apparatus (100) of claim 7, wherein said second securing portion aperture and said third securing portion aperture are positioned such that they define a first position common aperture when said wheel (300) is in said first position; wherein said securing structure comprises a fixing member sized extend at least partially through said first position common aperture.

9. The apparatus (100) of any one preceding claim, wherein said apparatus (100) comprises an adjustment mechanism (700) for adjusting the height of said body relative to said wheel (300).

10. The apparatus (100) of any one preceding claim, wherein said apparatus (100) is a mower.

11. The apparatus of claim 10, wherein said apparatus (100) is a flail mower; wherein the axis of rotation of said wheel (300) and the axis of rotation of a flail within said flail mower are coaxial when said wheel (300) is in said second position.

12. The apparatus (100) of any one preceding claim, wherein said apparatus (100) further comprises a second wheel (1300) and a second mounting member (400) connecting said second wheel (1300) to said body portion (200), wherein said second mounting member (400) comprises a hinge portion (403), wherein said second wheel (1300) is movable from a first position substantially behind said body portion (200) to a second position substantially adjacent to said body portion (200) via actuation of said hinge portion (403).

13. The apparatus (100) of claim 8, wherein said wheel (300) and said second wheel (1300) are connected to said body portion (200) such that the movement of said wheel (300) between its first and second positions is independent of the movement of said second wheel (1300) between its first and second positions.

14. The apparatus (100) of any one proceeding claim, wherein the apparatus (100) further comprises a tow bar.

15. Use of the apparatus (100) of any one preceding claim behind a vehicle.

## Patentansprüche

1. Eine Vorrichtung (100) zum Ziehen hinter einem Fahrzeug, wobei die Vorrichtung (100) Folgendes beinhaltet:
einen Körperabschnitt (200);
ein Rad (300); und
ein Montageelement (400), das das Rad (300) mit dem Körperabschnitt (200) verbindet;
wobei das Montageelement (400) einen Scharnierabschnitt (403) beinhaltet und wobei das Rad (300) über eine Betätigung des Scharnierabschnitts (403) von einer ersten Position im Wesentlichen hinter dem Körperabschnitt (200) in eine zweite Position im Wesentlichen neben dem Körperabschnitt (200) bewegbar ist;
**dadurch gekennzeichnet, dass** das Montageelement (400) ferner eine Sicherungsstruktur zum Sichern des Rads (300) in der ersten Position und/oder der zweiten Position beinhaltet und
wobei die Sicherungsstruktur einen ersten Sicherungsabschnitt (501) und einen zweiten Sicherungsabschnitt (502) beinhaltet, wobei sich der Scharnierabschnitt (403) zwischen dem ersten Sicherungsabschnitt (501) und dem zweiten Sicherungsabschnitt (502) befindet.

2. Vorrichtung (100) gemäß Anspruch 1, wobei einer von dem ersten Sicherungsabschnitt (501) und dem zweiten Sicherungsabschnitt (502) eine Öffnung beinhaltet und der andere von dem ersten Sicherungsabschnitt (501) und dem zweiten Sicherungsabschnitt (502) einen Vorsprung beinhaltet, der so bemessen ist, dass er in die Öffnung eingreift oder durch sie hindurchgeht, wenn sich das Rad (300) in der zweiten Position befindet.

3. Vorrichtung (100) gemäß Anspruch 1, wobei der erste Sicherungsabschnitt (501) eine erste Sicherungsabschnittöffnung beinhaltet und der zweite Sicherungsabschnitt (502) eine zweite Sicherungsabschnittöffnung beinhaltet; wobei der Querschnitt der ersten Sicherungsabschnittöffnung und der zweiten Sicherungsabschnittöffnung im Wesentlichen identisch sind.

4. Vorrichtung (100) gemäß Anspruch 3, wobei die erste Sicherungsabschnittöffnung und die zweite Sicherungsabschnittöffnung so positioniert sind, dass sie eine gemeinsame Öffnung der zweiten Position definieren, wenn sich das Rad (300) in der zweiten Position befindet; wobei die gemeinsame Öffnung der zweiten Position einen Querschnitt aufweist, der mit der ersten Sicherungsabschnittöffnung und/oder der zweiten Sicherungsabschnittöffnung identisch ist.

5. Vorrichtung (100) gemäß Anspruch 4, wobei die Sicherungsstruktur ein Befestigungselement beinhaltet, das so bemessen ist, dass es sich mindestens teilweise durch die gemeinsame Öffnung der zweiten Position erstreckt; wobei mindestens eine von der ersten Sicherungsabschnittöffnung und der zweiten Sicherungsabschnittöffnung ein Öffnungsgewinde beinhaltet und das Befestigungselement ein Befestigungsgewinde beinhaltet, das zu dem Öffnungsgewinde komplementär ist.

6. Vorrichtung (100) gemäß einem der vorhergehenden Ansprüche, wobei die Sicherungsstruktur einen dritten Sicherungsabschnitt (503) beinhaltet; wobei sich der Scharnierabschnitt (403) zwischen dem ersten Sicherungsabschnitt (501) und dem dritten Sicherungsabschnitt (503) befindet; wobei sich der Scharnierabschnitt (403) zwischen dem zweiten Sicherungsabschnitt (502) und dem dritten Sicherungsabschnitt (503) befindet.

7. Vorrichtung (100) gemäß Anspruch 6, wobei einer von dem zweiten Sicherungsabschnitt (502) und dem dritten Sicherungsabschnitt (503) eine Öffnung beinhaltet und der andere von dem zweiten Sicherungsabschnitt (502) und dem dritten Sicherungsabschnitt (503) einen Vorsprung beinhaltet, der so bemessen ist, dass er in die Öffnung eingreift oder durch sie hindurchgeht, wenn sich das Rad (300) in der ersten Position befindet; wobei der zweite Sicherungsabschnitt (502) eine zweite Sicherungsabschnittöffnung beinhaltet und der dritte Sicherungsabschnitt (503) eine dritte Sicherungsabschnittöffnung beinhaltet.

8. Vorrichtung (100) gemäß Anspruch 7, wobei die zweite Sicherungsabschnittöffnung und die dritte Sicherungsabschnittöffnung so positioniert sind, dass sie eine gemeinsame Öffnung der ersten Position definieren, wenn sich das Rad (300) in der ersten Position befindet; wobei die Sicherungsstruktur ein Befestigungselement beinhaltet, das so bemessen ist, dass es sich mindestens teilweise durch die gemeinsame Öffnung der ersten Position erstreckt.

9. Vorrichtung (100) gemäß einem der vorhergehenden Ansprüche, wobei die Vorrichtung (100) einen Einstellmechanismus (700) zum Einstellen der Höhe des Körpers relativ zu dem Rad (300) beinhaltet.

10. Vorrichtung (100) gemäß einem der vorhergehenden Ansprüche, wobei die Vorrichtung (100) ein Mäher ist.

11. Vorrichtung gemäß Anspruch 10, wobei die Vorrichtung (100) ein Schlegelmäher ist; wobei die Drehachse des Rads (300) und die Drehachse eines Flegels in dem Schlegelmäher koaxial sind, wenn sich das Rad (300) in der zweiten Position befindet.

12. Vorrichtung (100) gemäß einem der vorhergehenden Ansprüche, wobei die Vorrichtung (100) ferner ein zweites Rad (1300) und ein zweites Montageelement (400), das das zweite Rad (1300) mit dem Körperabschnitt (200) verbindet, beinhaltet, wobei das zweite Montageelement (400) einen Scharnierabschnitt (403) beinhaltet, wobei das zweite Rad (1300) über eine Betätigung des Scharnierabschnitts (403) von einer ersten Position im Wesentlichen hinter dem Körperabschnitt (200) in eine zweite Position im Wesentlichen neben dem Körperabschnitt (200) bewegbar ist.

13. Vorrichtung (100) gemäß Anspruch 8, wobei das Rad (300) und das zweite Rad (1300) derart mit dem Körperabschnitt (200) verbunden sind, dass die Bewegung des Rads (300) zwischen seiner ersten und zweiten Position unabhängig von der Bewegung des zweiten Rads (1300) zwischen seiner ersten und zweiten Position ist.

14. Vorrichtung (100) gemäß einem der vorhergehenden Ansprüche, wobei die Vorrichtung (100) ferner eine Zugstange beinhaltet.

15. Verwendung der Vorrichtung (100) gemäß einem der vorhergehenden Ansprüche hinter einem Fahrzeug.

## Revendications

1. Appareil (100) destiné à être remorqué derrière un véhicule, ledit appareil (100) comprenant :
une partie formant corps (200) ;
une roue (300) ; et
un élément de montage (400) reliant ladite roue (300) à ladite partie formant corps (200) ;
dans lequel ledit élément de montage (400) comprend une partie formant charnière (403), et dans lequel ladite roue (300) peut être déplacée d'une première position substantiellement derrière ladite partie formant corps (200) à une deuxième position substantiellement adjacente à ladite partie formant corps (200) par le biais d'un actionnement de ladite partie formant charnière (403) ;
**caractérisé en ce que** ledit élément de montage (400) comprend en outre une structure d'assujettissement destinée à assujettir ladite roue (300) dans ladite première position et/ou ladite deuxième position, et
dans lequel ladite structure d'assujettissement comprend une première partie d'assujettissement (501) et une deuxième partie d'assujettissement (501), dans lequel ladite partie formant charnière (403) est intermédiaire entre ladite première partie d'assujettissement (501) et ladite deuxième partie d'assujettissement (502).

2. L'appareil (100) de la revendication 1, dans lequel une partie d'assujettissement parmi ladite première partie d'assujettissement (501) et ladite deuxième partie d'assujettissement (502) comprend une ouverture, et l'autre partie d'assujettissement parmi ladite première partie d'assujettissement (501) et ladite deuxième partie d'assujettissement (502) comprend une saillie dimensionnée pour se mettre en prise avec ladite ouverture ou passer à travers celle-ci lorsque ladite roue (300) est dans ladite deuxième position.

3. L'appareil (100) de la revendication 1, dans lequel ladite première partie d'assujettissement (501) comprend une ouverture de première partie d'assujettissement et ladite deuxième partie d'assujettissement (502) comprend une ouverture de deuxième partie d'assujettissement ; dans lequel les sections transversales de ladite ouverture de première partie d'assujettissement et de ladite ouverture de deuxième partie d'assujettissement sont substantiellement identiques.

4. L'appareil (100) de la revendication 3, dans lequel ladite ouverture de première partie d'assujettissement et ladite ouverture de deuxième partie d'assujettissement sont positionnées de telle sorte qu'elles définissent une ouverture commune de deuxième position lorsque ladite roue (300) est dans ladite deuxième position ; ladite ouverture commune de deuxième position ayant une section transversale identique à ladite ouverture de première partie d'assujettissement et/ou à ladite ouverture de deuxième partie d'assujettissement.

5. L'appareil (100) de la revendication 4, dans lequel ladite structure d'assujettissement comprend un élément de fixation dimensionné pour s'étendre au moins partiellement à travers ladite ouverture commune de deuxième position ; dans lequel au moins une ouverture parmi ladite ouverture de première partie d'assujettissement et ladite ouverture de deuxième partie d'assujettissement comprend un filetage d'ouverture, et ledit élément de fixation comprend un filetage de fixation complémentaire audit filetage d'ouverture.

6. L'appareil (100) d'une quelconque revendication précédente, dans lequel ladite structure d'assujettissement comprend une troisième partie d'assujettissement (503) ; dans lequel ladite partie formant charnière (403) est intermédiaire entre ladite première partie d'assujettissement (501) et ladite troisième partie d'assujettissement (503) ; ladite partie formant charnière (403) étant intermédiaire entre ladite deuxième partie d'assujettissement (502) et ladite troisième partie d'assujettissement (503).

7. L'appareil (100) de la revendication 6, dans lequel une partie d'assujettissement parmi ladite deuxième partie d'assujettissement (502) et ladite troisième partie d'assujettissement (503) comprend une ouverture, et l'autre partie d'assujettissement parmi ladite deuxième partie d'assujettissement (502) et ladite troisième partie d'assujettissement (503) comprend une saillie dimensionnée pour se mettre en prise avec ladite ouverture ou passer à travers celle-ci lorsque ladite roue (300) est dans ladite première position ; ladite deuxième partie d'assujettissement (502) comprenant une ouverture de deuxième partie d'assujettissement et ladite troisième partie d'assujettissement (503) comprenant une ouverture de troisième partie d'assujettissement.

8. L'appareil (100) de la revendication 7, dans lequel ladite ouverture de deuxième partie d'assujettissement et ladite ouverture de troisième partie d'assujettissement sont positionnées de telle sorte qu'elles définissent une ouverture commune de première position lorsque ladite roue (300) est dans ladite première position ; dans lequel ladite structure d'assujettissement comprend un élément de fixation dimensionné pour s'étendre au moins partiellement à travers ladite ouverture commune de première position.

9. L'appareil (100) d'une quelconque revendication précédente, ledit appareil (100) comprenant un mécanisme de réglage (700) destiné à régler la hauteur dudit corps par rapport à ladite roue (300).

10. L'appareil (100) d'une quelconque revendication précédente, ledit appareil (100) étant une tondeuse.

11. L'appareil de la revendication 10, ledit appareil (100) étant une tondeuse à fléau ; dans lequel l'axe de rotation de ladite roue (300) et l'axe de rotation d'un fléau à l'intérieur de ladite tondeuse à fléau sont coaxiaux lorsque ladite roue (300) est dans ladite deuxième position.

12. L'appareil (100) d'une quelconque revendication précédente, ledit appareil (100) comprenant en outre une deuxième roue (1300) et un deuxième élément de montage (400) reliant ladite deuxième roue (1300) à ladite partie formant corps (200), ledit deuxième élément de montage (400) comprenant une partie formant charnière (403), ladite deuxième roue (1300) pouvant être déplacée d'une première position substantiellement derrière ladite partie formant corps (200) à une deuxième position substantiellement adjacente à ladite partie formant corps (200) par le biais d'un actionnement de ladite partie formant charnière (403).

13. L'appareil (100) de la revendication 8, dans lequel ladite roue (300) et ladite deuxième roue (1300) sont reliées à ladite partie formant corps (200) de telle sorte que le déplacement de ladite roue (300) entre ses première et deuxième positions est indépendant du déplacement de ladite deuxième roue (1300) entre ses première et deuxième positions.

14. L'appareil (100) d'une quelconque revendication précédente, l'appareil (100) comprenant en outre une barre de remorquage.

15. Utilisation de l'appareil (100) d'une quelconque revendication précédente derrière un véhicule.
